# EUROPÄISCHE PATENTSCHRIFT

(11) **EP 1 624 759 B1**
(45) Veröffentlichungstag und Bekanntmachung des Hinweises auf die Patenterteilung: **17.09.2008**
(21) Anmeldenummer: 04712571.1
(22) Anmeldetag: 19.02.2004
(51) Int. Cl.: A21B 5/02, A47J 37/06

(54) **WAFFELBLATT**
WAFFLE SHEET
GAUFRE

(30) Priorität: 21.05.2003 AT 3542003
(43) Veröffentlichungstag der Anmeldung: 15.02.2006
(73) Patentinhaber: HAAS, Franz, 1010 Wien (AT)
(72) Erfinder: HAAS, Franz, 1010 Wien (AT)
(74) Vertreter: Müllner, Martin
(86) Internationale Anmeldenummer: PCT/EP2004/050172
(87) Internationale Veröffentlichungsnummer: WO 2004/103077

(56) Entgegenhaltungen:
- DE-A- 4 421 200
- DE-A- 19 959 465
- DE-C- 208 592
- DE-C- 715 657
- DE-C- 935 721
- FR-A- 701 239
- GB-A- 960 721
- GB-A- 2 121 274
- US-A- 1 374 522
- US-A- 2 048 011
- US-A- 2 066 507
- US-A- 3 908 022

## Beschreibung

### Technisches Umfeld

Die Erfindung betrifft ein Waffelblatt als Dauerbackware mit beiderseitiger Rippenstruktur, die in einer Backform zwischen ebenen strukturierten Backplatten ausgebildet und dort formstabil ausgebacken wird, wobei die Rippen der Rippenstruktur beiderseits auf einer Trägerschicht angeordnet sind. Ferner betrifft die Erfindung eine beheizbare Backform zur Herstellung eines Waffelblattes.

Waffelblätter werden vorzugsweise zur Herstellung von cremegefüllten Schnitten aufeinander geschichtet und bilden ein mehrlagiges Produkt. Sie werden auch in Schokoladen als Einlagen verwendet und bilden in einlagiger oder mehrlagiger Erscheinungsform ein feines Jausengebäck. Jedes dieser Waffelblätter weist als Trägerschicht eine ebene Mittelschicht aus Teig als Kernschicht auf, die die Rippenstruktur in Form eines quadratischen Karos trägt. Diese Rippenstruktur ist beiderseits der Kernschicht vorgesehen. Das Rippenkaro kann auf der einen Seite zum Rippenkaro der anderen Seite um eine halbe Teilung versetzt sein.

Die Ausbildung der Kernschicht führt dazu, dass es unterhalb der Rippen, in voller Länge der Rippen zu Teiganhäufungen kommt. Im Kreuzungsbereich der Rippen erreichen diese Teiganhäufungen ein Maximum. Da der Backvorgang innerhalb der Backplatten im stationären Zustand bei gleicher Temperatur erfolgt, sind diese Teiganhäufungen nicht ausgebacken, wenn das Waffelblatt ansonsten die für ein Ausbacken charakteristische goldbraune Farbe aufweist. Das Ergebnis ist goldbraun mit blassen Flecken im rohgebliebenen Bereich. Wird die Backtemperatur höher gestellt, dann können auch die in Rede stehenden Teiganhäufungen durchgebacken sein, nur weist dann das Waffelblatt bis auf die Anhäufungsbereiche eine viel zu dunkle Farbe auf - die Oberfläche ist verbrannt und ungenießbar. Wird die Backtemperatur erniedrigt, dann erhöht sich die Backzeit überproportional in unwirtschaftlicher Weise, z.B. von 1 Minute auf 3 Minuten.

### Offenbarung der Erfindung

### Technisches Problem

Ziel der Erfindung ist es, ein Waffelblatt so auszubilden, dass Teiganhäufungen möglichst vermieden werden, das Waffelblatt bei möglichst kurzer Backzeit gleichmäßig durchgebacken ist und eine gleichmäßige Färbung aufweist.

### Technische Lösung

Dies wird dadurch erreicht, dass die Trägerschicht als Wellplatte gleicher Dicke mit beiderseitigen Oberflächen aus geraden Erzeugenden gebildet ist, die einer Wellen-oder Zickzacklinie folgen, wobei die Wellentäler der einen Oberfläche der Wellplatte und die Wellentäler der gegenüberliegenden Oberfläche eine gedachte Mittellinie im Querschnitt berühren oder diese überlappend überschreiten, dass die Rippen, die eine mittlere Wandstärke entsprechend der Dicke der Wellplatte aufweisen, schräg oder senkrecht zu den Wellenscheitellinien liegen und die Wellentäler vorzugsweise mit gleicher Tiefe überbrücken. Wesentlich ist das Wegfallen einer bei den hier in Rede stehenden gebackenen Waffelblättern bisher üblichen ebenen Kernschicht, die das Kernproblem bei den Teiganhäufungen darstellt. Einander überlappende Wellentäler einer so ausgeprägt gewellten oder zick-zack geformten Kernschicht weichen gemäß der Erfindung von der planen Kernschicht ab. Die Überlappungen der Wellentäler stellen sicher, dass es zu keiner durchgehenden ebenen Kernschicht als Trägerschicht kommt. Im Grenzfall genügt es schon, wenn die Wellentäler mit einander entgegengenchteten Ausnehmungen die gedachte Mittellinie des Waffelblattes im Querschnitt berühren. Das im zick-zack eng gewellte Waffelblatt wäre bloß in einer Richtung formstabil. Als Beitrag zur Formstabilität in allen ebenen Achsenrichtungen liegen in den Wellentälern schlanke Rippen. Diese ergeben zusammen mit den Scheitellinien der Wellen eine Karostruktur. Diese Karos können Quadrate, Rechtecke, Dreiecke aber auch Rhomben und Trapeze sein. Natürlich sind die Rippen in aller Regel beiderseits der Wellplatte vorgesehen. Durch gegenseitiges Versetzen der Rippen auf beiden Seiten wird, wie bekannt, einer Teiganhäufung zusätzlich entgegengewirkt.

Alle Merkmale gemeinsam ermöglichen ein homogenes Backergebnis dieser Dauetbackware. Die Restfeuchtigkeit ist dabei geringer als 2%.

Der Bogen für die Verwendung der erfindungsgemäßen Waffelblätter ist weit gespannt. Feine Strukturen finden meist im Süßwarenbereich als cremegefüllte Waffelschnitten Anwendung, gröbere Strukturen werden als Brotwaffeln zur Verwendung als Nahrungsmittel, z.B. in Verbindung mit pikanten Aufstrichen, eingesetzt. Ein Unterscheidungskriterium der Strukturen ist der Teiganteil des Waffelblattes pro Raumeinheit, ohne Teiganhäufungen zu bilden. Je nach Bedarf kann dieser bei dem erfindungsgemäßen Waffelblatt einfach verändert werden.

Dazu ist es zweckmäßig, wenn zur Einstellung, also Vergrößerung oder Verkleinerung, des Teiganteiles pro Raumeinheit des Waffelblattes der Neigungswinkel der Wellen- oder Zickzacklinie der als Trägerschicht ausgebildeten Wellplatte bei im Wesentlichen gleichen Wandstärken, insbesondere zwischen 45° und 75°, zur gedachten Mittellinie vorwählbar ist Es können auch zur Einstellung, also Vergrößerung oder Verkleinerung, des Teiganteiles pro Raumeinheit des Waffelblattes die Krümmungsradien an den Wellenscheitellinien bei im Wesentlichen unveränderten Wandstärken und Neigungswinkeln, insbesondere zwischen 0,6 mm und 2 mm, vorwählbar sein.

Die Erfindung betrifft auch eine beheizbare Backform zur Herstellung eines Waffelblattes der beschriebenen Art mit gegeneinander beweglichen rechteckigen Backplatten, die Vertiefungen als Negativ zur Oberfläche bzw. zur Untersicht des Waffelblattes aufweisen, wobei die obere Backplatte randseitige Leisten trägt, die den Umfang der unteren Backplatte der geschlossenen Backform dichtend übergreifen. Zur praktischen Durchführung des Backvorganges ist es notwendig und für die Optimierung zweckmäßig, wenn in den Leisten an den zu den Scheitellinien der Wellung für die Trägerschicht parallelen Rändern der Backplatte Dampfschlitze vorgesehen sind, die in Abständen von beispielsweise 2,5 cm parallel zueinander in der Oberfläche der Leisten liegen und bei geschlossener Backform etwa 1,5 mm breite und etwa 0,8 mm tiefe Kanäle bilden, die an den Freiraum für die Wellung in den Backplatten zur Dampfableitung randseitig anschließen und an einer Längsseite der Leisten frei auslaufen. Insbesondere ist es vorteilhaft, wenn die die Trägerschicht bzw. den Tragkern des Waffelblattes bildende Wellung an jenen Randseiten der Backform, die parallel zu den Scheitellinien der Wellung liegen, jeweils in der unteren Backplatte etwa in einer Scheitellinie der Wellung endet und jeweils nach außen offen ist bzw. bei geschlossener Backform von den Leisten der oberen Backplatte umfasst und bis auf die Dampfschlitze zu der Randöffnung hin abgeschlossen ist. Damit wird ein homogenes Backergebnis erreicht. Bei der Auslegung der Backform, die wie üblich rechteckig ausgebildet ist, orientiert man die Waffelstruktur derart, dass sich die Scheitellinien der Wellung für die Trägerschicht oder Kernschicht des Waffelblattes parallel zu den Längsseiten der rechteckigen Backplatten der Backform erstrecken.

### Kurze Beschreibung von Zeichnungen

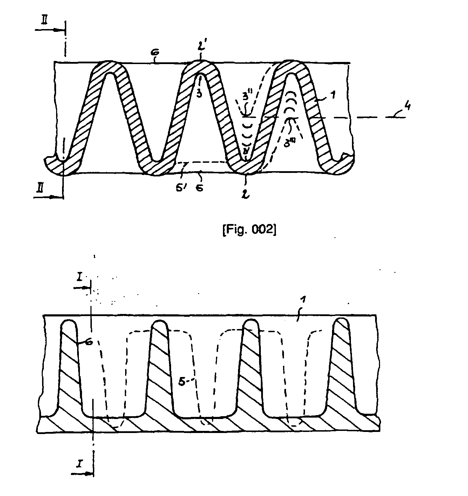

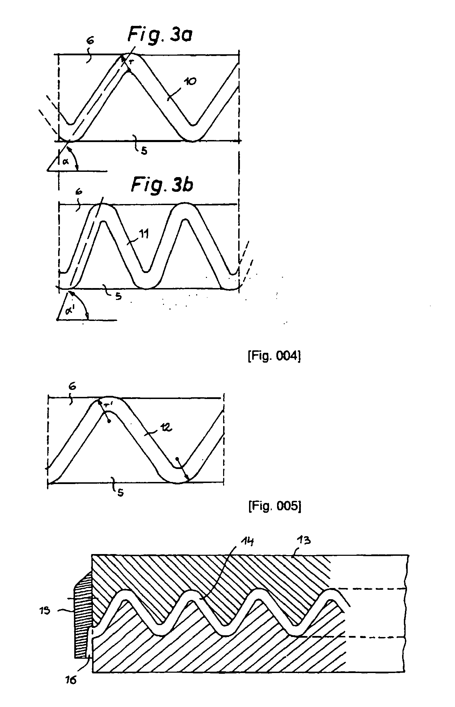

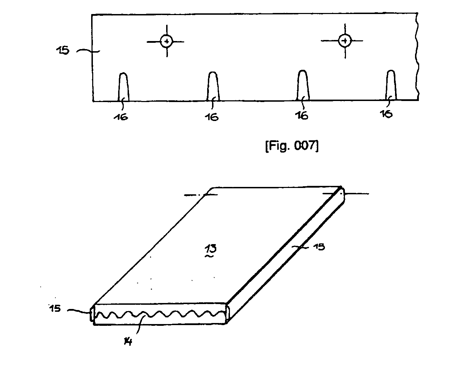

In der Zeichnung ist ein Ausführungsbeispiel für ein Waffelblatt als gebackene Dauerbackware z.B. zur Herstellung von Waffelschnitten in Vergrößerung dargestellt. Fig. 1 zeigt einen Querschnitt durch ein Waffelblatt nach der Linie I-I in Fig. 2, Fig. 2 einen Längsschnitt durch das Waffelblatt nach der Linie II**-**II in Fig. 1, Fig. 3a und Fig. 3b jeweils einen Querschnitt durch einen Teil einer Wellplatte mit unter□schiedlichen Wellen bzw. Zick-Zack-Winkeln, Fig. 4 eine Ausbildung ähnlich Fig. 3a, jedoch mit größeren Krümmungsradien, Fig. 5 einen Querschnitt durch eine Backform mit Leisten am Rand, Fig. 6 eine solche Leiste in Ansicht von der Innenseite und Fig. 7 eine Backform in Schrägansicht.

### Die beste Art und Weise, die Erfindung auszunutzen

Die Herstellung eines Waffelblattes erfolgt durch Eingießen eines flüssigen Teiges in eine beheizbare Backform, die zwei Backplatten umfasst, welche jeweils eine Struktur gemäß der Oberseite und der Unterseite des Waffelblattes aufweisen. Die Backform wird durch Aufeinanderlegen der Backplatten unter Einschluss des Teiges dicht geschlossen. Lediglich einige Dampfkanäle führen nach außen, damit der beim Backvorgang im Inneren entstehende Dampf abgeführt werden kann. Unter Druck wird das Waffelblatt ausgebacken. Die Waffelblätter werden einzeln nacheinander hergestellt.

Ein kontinuierliches Verfahren durch Walzen eines Teiges und nachfolgendes Durchlaufen eines Frittierbades scheidet bei der Waffelblätterherstellung aus, da hier viel genauere Oberflächenausbildungen wie auch eine besonders feine Struktur sowie ein Endprodukt mit äußert geringer Restfeuchtigkeit verlangt wird.

Das Waffelblatt besteht gemäß Fig. 1 und 2 aus einer eng gewellten Platte, die hier als Wellplatte 1 bezeichnet wird. Diese Wellplatte 1 hat durchwegs gleiche Dicke. Beispielsweise beträgt die Dicke 0,6 bis 2 mm und die Amplitude der Wellung 3 bis 5 mm. Die Wellung entspricht einer Zick-Zacklinie, kann aber auch einer Sinuslinie angenähert sein. Wellenberge 2, 2' und Wellentäler 3, 3' schließen aneinander, wobei sie gleichermaßen von beiden Seiten ausgeprägt sind. Wesentlich ist, dass die Wellentäler 3 und 3' einander überlappen, also jeweils jenseits einer gedachten Mittellinie 4 liegen oder diese mindestens berühren. Der letztere Grenzfall ist in Fig. 1 strichliert eingezeichnet, wobei die Wellentäler mit 3" und 3"' bezeichnet sind. Die Wellung kann auch einer Trapezlinie folgen und die Amplituden können eine Höhe von 8 mm erreichen.

Die Wellplatte 1 wird geometrisch gesehen als Fläche von parallelen geraden Erzeugenden gebildet, die einer Wellenlinie folgen. Die Wellentäler 3, 3' bzw. 3", 3"' werden von Rippen 5, 6 überbrückt, die in Fig. 1 und 2 annähernd bis zu den Wellenbergen 2, 2' reichen. Sie können aber auch seichter sein, wie dies durch die Linie 5' in Fig. 1 angedeutet ist. Die Rippen 5 und die Rippen 6 liegen beim Ausführungsbeispiel jeweils in gleichen Abständen parallel zueinander. Auf der Unterseite sind die Rippen 5 um eine halbe Teilung zu den Rippen 6 der Oberseite des Waffelblattes versetzt. Dies ist in Fig. 2 durch die strichlierten Rippen 5 angedeutet.

Das Waffelblatt gemäß der Erfindung kann als besonders fein strukturiertes Dauerbackwerk auch mit einem höheren Teiganteil ohne Teiganhäufungen und dadurch mit durchwegs vollkommen ausgebackenen Wandstärken hergestellt werden, sodass es höchsten Anforderungen an Homogenität und Gleichmäßigkeit entspricht.

In der Zeichnung ist ein Waffelblatt mit sehr enger Wellung dargestellt. Die Wellung kann natürlich auch wesentlich stärker auseinandergezogen, also mit breiten Wellentälern ausgebildet sein. Vorzugsweise entsprechen die Abstände der Scheitellinien der Wellenberge 2 auf der einen bzw. 2' auf der anderen Oberfläche den Abständen der Scheitellinien der Rippen 5, 5', 6. Dadurch ergibt sich in Draufsicht ein Waffelkaro mit Quadraten oder (bei Schräglage der Rippen) ein Waffelkaro mit Rhomben.

Fig. 3a und Fig. 3b zeigen einen Teil eines Waffelblattes im Querschnitt Die Wellplatte 10 folgt im Sinne der Erfindung einer Zick-Zacklinie mit unterschiedlichen Winkeln α, α'. Die Ausführung nach Fig. 3a ist weiter auseinander gezogen als jene nach Fig. 3b. Dort liegen die Wellen der Waffelplatte 11 enger. Es entspricht der Winkel α der Schenkel der Wellung 14 der Wellplatte in Fig. 3a zur Mittelebene 4 bzw. zu einer Parallelen etwa 55°. Der Winkel α' in Fig. 3b ist etwa 70°. Man sieht, dass bei einem Stück gleicher Breite der Teiganteil, bezogen auf die Raumeinheit, in Fig. 3b größer ist, als in Fig. 3a. Somit kann bei der Planung eines Waffelproduktes durch Verändern des Winkels α, α' der Teiganteil pro Raumeinheit vergrößert bzw. verkleinert werden. Die Höhe der Waffel und die Wandstärken (z.B. 1 bis 2 mm) bleiben dabei unverändert.

Die Krümmungsradien sind in Fig. 3a mit r bezeichnet; wenn man diese Krümmungsradien verändert, z.B. zu r' vergrößert (Fig. 4), jedoch Wandstärken und Höhen unverändert lässt, dann ergibt sich ebenfalls eine Veränderung des Teiganteiles pro Raumeinheit, wie die Wellplatte 12 in Fig. 4 gegenüber Fig. 3a zeigt. Übliche Radien liegen zwischen 0,6 und 2 mm.

In Fig. 5 ist ein Endbereich einer Backform 13 im Querschnitt dargestellt. Die Wellung 14, die als Hohlraum zwischen den Backplatten den Teig aufnimmt, läuft am Ende frei aus und wird durch eine Leiste 15 abgedeckt, die in gleichen Abständen Dampfschlitze 16 aufweist. Die Innenansicht der Leiste 15 mit den Dampfschlitzen 16 ist in Fig. 6 dargestellt. Die Dampfschlitze sind etwa 1,5 mm breit, etwa 0,8 mm tief und liegen im Abstand von 2 bis 3 cm. Die Wellung 14 in den Hälften der Backform 13 endet am Rand, vorzugsweise am Längsrand der Backform, als schmaler Schlitz, der durch die Dampfschlitze 16 entlüftet wird. Beim Backvorgang tritt Wasserdampf durch den die Wellung 14 füllenden Teig hindurch und am Längsrand dann durch die Dampfschlitze 16 aus. Deren Anzahl, Größe und Anordnung - etwa in Weiterführung der Wellung 14 in der Leiste 16 - ist für das Backergebnis von entscheidender Bedeutung.

Fig. 7 zeigt in grober Vereinfachung eine geschlossene Backform 13 unter Weglassung von stirnseitigen Abdichtleisten, nur mit seitlichen Dampfleisten 15. Die Backform 16 ist rechteckig und die Dampfleiste 15 liegt an der Längsseite, parallel zu den Scheitellinien der Wellung 14, hier an der oberen Hälfte der Backform montiert. Die genannten Abdeckleisten (nicht dargestellt) könnten an den kürzeren Querseiten der Backform (z.B. an der jeweils unteren Backformhälfte) montiert sein. Sie dienen der Abdichtung und Zentrierung.

## Patentansprüche

1. Waffelblatt als Dauerbackware mit beiderseitiger Rippenstruktur, die in einer Backform (13) zwischen ebenen strukturierten Backplatten ausgebildet und dort formstabil ausgebacken wird, wobei die Rippen (5,5',6) der Rippenstruktur beiderseits auf einer Trägerschicht angeordnet sind, und die Rippen (5,5',6) den einen Oberfläche zu den Rippen (5,5',6) den anderen Oberfläche zueinander versetzt sind, **dadurch gekennzeichnet, dass** die Trägerschicht als Wellplatte gleicher Dicke mit beiderseitigen Oberflächen aus geraden Erzeugenden gebildet ist, die einer Wellen- oder Zickzacklinie folgen, wobei die Wellentäler (3, 3', 3", 3"') der einen Oberfläche der Wellplatte (1, 10, 11, 12) und die Wellentäler (3, 3', 3", 3"') der gegenüberliegenden Oberfläche eine gedachte Mittellinie (4) im Querschnitt berühren oder diese überlappend überschreiten, dass die Rippen (5, 5', 6), die eine mittlere Wandstärke entsprechend der Dicke der Wellplatte (1) aufweisen, schräg oder senkrecht zu den Wellenscheitellinien liegen und die Wellentäler (3, 3', 3", 3"') vorzugsweise mit gleicher Tiefe überbrücken.

2. Waffelblatt nach Anspruch 1, **dadurch gekennzeichnet, dass** die Abstände der Scheitellinien der Wellenberge (2, 2') auf jeder der Oberflächen den Abständen der Scheitellinien der Rippen (5, 5', 6) entsprechen.

3. Waffelblatt nach den Ansprüchen 1 oder 2, **dadurch gekennzeichnet, dass** zur Einstellung, also Vergrößerung oder Verkleinerung, des Teiganteiles pro Raumeinheit des Waffelblattes der Neigungswinkel (α, α') der Wellen- oder Zickzacklinie der als Trägerschicht ausgebildeten Wellplatte (1, 10, 11, 12) bei im Wesentlichen gleichen Wandstärken, insbesondere zwischen 45° und 75°, zur gedachten Mittellinie (4) vorwählbar ist.

4. Waffelblatt nach den Ansprüchen 1 oder 2, **dadurch gekennzeichnet, dass** zur Einstellung, also Vergrößerung oder Verkleinerung, des Teiganteiles pro Raumeinheit des Waffelblattes die Krümmungsradien (r, r') an den Wellenscheitellinien der Wellung (14) bei im Wesentlichen unveränderten Wandstärken und Neigungswinkeln, insbesondere zwischen 0,6 mm und 2 mm, vorwählbar sind.

5. Beheizbare Backform zur Herstellung eines Waffelblattes nach den Ansprüchen 1 bis 4 mit gegeneinander beweglichen rechteckigen Backplatten, die Vertiefungen als Negativ zur Oberfläche bzw. zur Untersicht des Waffelblattes aufweisen, wobei die obere Backplatte randseitige Leisten trägt, die den Umfang der unteren Backplatte der geschlossenen Backform dichtend übergreifen, **dadurch gekennzeichnet, dass** in den Leisten (15) an den zu den Scheitellinien der Wellung (14) für die Trägerschicht parallelen Rändern der Backplatte Dampfschlitze (16) vorgesehen sind, die in Abständen von beispielsweise 2,5 cm parallel zueinander in der Oberfläche der Leisten (15) liegen und bei geschlossener Backform (13) etwa 1,5 mm breite und etwa 0,8 mm tiefe Kanäle bilden, die an den Freiraum für die Wellung (14) in den Backplatten zur Dampfableitung randseitig anschließen und an einer Schmalseite der Leisten (15) frei auslaufen.

6. Beheizbare Backform nach Anspruch 5, **dadurch gekennzeichnet, dass** die die Trägerschicht bzw. den Tragkern des Waffelblattes (1, 10, 11, 12) bildende Wellung (14) an jenen Randseiten der Backform (13), die parallel zu den Scheitellinien der Wellung (14) liegen, jeweils in der unteren Backplatte etwa in einer Scheitellinie der Wellung (14) endet und jeweils nach außen offen ist bzw. bei geschlossener Backform (13) von den Leisten (15) der oberen Backplatte umfasst und bis auf die Dampfschlitze (16) zu der Randöffnung hin abgeschlossen ist.

7. Beheizbare Backform nach den Ansprüchen 5 und 6, **dadurch gekennzeichnet, dass** sich die Scheitellinien der Wellung (14) für die Trägerschicht oder Kernschicht des Waffelblattes (1, 10, 11, 12) parallel zu den Längsseiten der rechteckigen Backplatten der Backform (13) erstrecken.

## Claims

1. Waffle sheet as a long-life baked product with a rib structure on both sides which is formed in a baking mould (13) between planar structured baking plates and is baked there so as to be dimensionally stable, the ribs (5, 5', 6) of the rib structure being arranged on both sides on a support layer and the ribs (5, 5', 6) of one surface being offset in relation to one another with respect to the ribs (5, 5', 6) of the other surface, **characterised in that** the support layer is formed as a corrugated plate of equal thickness with surfaces on both sides composed of straight generating lines, which follow an undulating or zigzag line, wherein the undulation valleys (3, 3', 3", 3"') of one surface of the corrugated plate (1, 10, 11, 12) and the undulation valleys (3, 3', 3", 3''') of the opposing surface touch an imaginary centre line (4) in cross-section or exceed it in an overlapping manner, **in that** the ribs (5, 5', 6) which have an average wall thickness corresponding to the thickness of the corrugated plate (1) are located obliquely or perpendicularly to the undulation apex lines and bridge the undulation valleys (3, 3', 3", 3"') preferably with the same depth.

2. Waffle sheet according to claim 1, **characterised in that** the spacings of the apex lines of the undulation peaks (2, 2') on each of the surfaces correspond to the spacings of the apex lines of the ribs (5, 5', 6).

3. Waffle sheet according to claims 1 or 2, **characterised in that,** for adjustment, in other words, for increasing or reducing the proportion of dough per space unit of the waffle sheet, the angle of inclination (α, α') of the undulating or zigzag line of the corrugated plate (1, 10, 11, 12) configured as a support layer can be preselected, with substantially the same wall thicknesses, to be in particular between 45° and 75°, with respect to the imaginary centre line (4).

4. Waffle sheet according to claims 1 or 2, **characterised in that,** for adjustment, in other words, increasing or reducing the proportion of dough per space unit of the waffle sheet, the radii of curvature (r, r') at the undulation apex lines of the undulation (14), with substantially unchanged wall thicknesses and angles of inclination, can be preselected to be, in particular, between 0.6 mm and 2 mm.

5. Heatable baking mould for producing a waffle sheet according to claims 1 to 4 with rectangular baking plates which can be moved with respect to one another and which have indentations as a negative to the surface or to the bottom view of the waffle sheet, the upper baking plate having edge strips which overlap the periphery of the lower baking plate of the closed baking mould in a sealing manner, **characterised in that** vapour slots (16) are provided in the strips (15) at the edges of the baking plate which are parallel to the apex lines of the undulation (14) for the support layer, which vapour slots lie parallel to one another in the surface of the strips (15) at spacings of, for example, 2.5 cm and, when the baking mould (13) is closed, form channels which are approximately 1.5 mm in width and about 0.8 mm in depth and adjoin the free space for the undulation (14) in the baking plates for discharging vapour at the edge and run out freely on a narrow side of the strips (15).

6. Heatable baking mould according to claim 5, **characterised in that** the undulation (14) forming the support layer or the support core of the waffle sheet (1, 10, 11, 12) ends at the edge sides of the baking mould (13) which lie parallel to the apex lines of the undulation (14), in each case in the lower baking plate approximately in an apex line of the undulation (14) and is in each case open to the outside or, when the baking mould (13) is closed, is encompassed by the strips (15) of the upper baking plate and is sealed except for the vapour slots (16) toward the edge opening.

7. Heatable baking mould according to claims 5 and 6, **characterised in that** the apex lines of the undulation (14) for the support layer or core layer of the waffle sheet (1, 10, 11, 12) extend parallel to the longitudinal sides of the rectangular baking plates of the baking mould (13).

## Revendications

1. Feuille de gaufre en tant qu'article de biscuiterie présentant sur les deux côtés une structure nervurée, qui est réalisée dans un moule à pâtisserie (13) entre des plaques à pâtisserie de structure plane et y est cuite jusqu'à une forme stable, les nervures (5, 5', 6) de la structure nervurée étant disposées des deux côtés sur une couche de support et les nervures (5, 5', 6) d'une des surfaces étant décalées par rapport aux nervures (5, 5', 6) de l'autre surface, **caractérisée en ce que** la couche de support est formée sous la forme d'une plaque ondulée de même épaisseur avec de chaque côté des surfaces constituées de génératrices droites qui suivent une ligne ondulée ou en zigzag, les creux d'ondulation (3, 3', 3", 3"') d'une surface de la plaque ondulée (1, 10, 11, 12) et les creux d'ondulation (3, 3', 3", 3"') de la surface opposée touchant une ligne médiane imaginaire (4) en section transversale ou la recouvrant en chevauchement, et **en ce que** les nervures (5, 5', 6), qui présentent une épaisseur de paroi moyenne correspondant à l'épaisseur de la plaque ondulée (1), sont obliques ou perpendiculaires par rapport aux lignes de faîte d'ondulation et couvrent les creux d'ondulation (3, 3', 3", 3"') de préférence avec la même profondeur.

2. Feuille de gaufre selon la revendication 1, **caractérisée en ce que** les espacements entre les lignes de fuite des crêtes d'ondulation (2, 2') sur chacune des surfaces correspondent aux espacements entre les lignes de fuite des nervures (5, 5',6).

3. Feuille de gaufre selon les revendications 1 oui 2, **caractérisée en ce que** pour ajuster, donc augmenter ou diminuer, la part de pâte par unité de volume de la feuille de gaufre, peut être présélectionné l'angle d'inclinaison (α, α') de la ligne ondulée ou en zigzag de la plaque ondulée réalisée en tant que couche de support par rapport à la ligne médiane imaginaire (4), en particulier entre 45° et 75°, pour des épaisseurs de paroi sensiblement identiques.

4. Feuille de gaufre selon les revendications 1 ou 2, **caractérisée en ce que** pour ajuster, donc augmenter ou diminuer, la part de pâte par unité de volume de la feuille de gaufre, peut être présélectionné les rayons de courbure (r, r') sur les lignes de fuite de l'ondulation (14), en particulier entre 0,6 mm et 2 mm, pour des épaisseurs de paroi et des angles d'inclinaison sensiblement inchangés.

5. Moule à pâtisserie pouvant être chauffé, destiné à la production d'une feuille de gaufre selon les revendications 1 à 4, comportant des plaques à pâtisserie rectangulaires mobiles l'une par rapport à l'autre, qui présentent des renfoncements sous la forme d'un négatif par rapport à la surface et/ou par rapport à la couche inférieure de la feuille de gaufre, la plaque à pâtisserie supérieure portant des baguettes de bordure qui engrènent par le haut de manière étanche la périphérie de la plaque à pâtisserie inférieure du moule à pâtisserie fermé, **caractérisé en ce que** dans les baguettes (15) sont prévues sur les bords de la plaque à pâtisserie parallèles aux lignes de fuite de l'ondulation (14) de la couche de support des fentes à vapeur (16) qui se trouvent dans la surface des baguettes (15) parallèles les unes aux autres à des intervalles de par exemple 2,5 cm, et qui, lorsque le moule à pâtisserie (13) est fermé, forment des canaux d'une largeur d'environ 1,5 mm et d'une profondeur d'environ 0,8 mm, qui prolongent l'espace libre de l'ondulation (14) dans les plaques à pâtisserie pour dériver la vapeur du côté du bord et se terminent sur un côté étroit des baguettes (15).

6. Moule à pâtisserie pouvant être chauffé selon la revendication 5, **caractérisé en ce que** l'ondulation (14) qui forme la couche de support et/ou le centre de support de la feuille de gaufre (1, 10, 11, 12) aboutit sur chacun des bords latéraux du moule à pâtisserie (13), qui sont parallèles aux lignes de fuite de l'ondulation (14), dans la plaque à pâtisserie inférieure à peu près dans une ligne de fuite de l'ondulation (14) et est ouverte vers l'extérieur et/ou, lorsque le moule à pâtisserie(13) est fermé, est entourée par les baguettes (15) de la plaque à pâtisserie supérieure et fermée jusque qu'aux fentes à vapeur (16) en direction de l'ouverture périphérique.

7. Moule à pâtisserie pouvant être chauffé selon les revendications 5 et 6, **caractérisé en ce que** les lignes de fuite de l'ondulation (14) pour la couche de support ou la couche centrale de la feuille de gaufre (1, 10, 11, 12) s'étendent parallèlement aux côtés longitudinaux des plaques à pâtisserie rectangulaires du moule à pâtisserie (13).
